# EUROPÄISCHE PATENTSCHRIFT

(11) **EP 2 110 642 B1**
(45) Veröffentlichungstag und Bekanntmachung des Hinweises auf die Patenterteilung: **30.05.2018**
(21) Anmeldenummer: 09002314.4
(22) Anmeldetag: 24.02.2009
(51) Int. Cl.: G01D 5/14, F15B 15/28, F16F 9/32, F16H 59/70

(54) **Positionsmesssystem**
Position measurement system
Système de mesure de position

(30) Priorität: 18.04.2008 DE 102008019541
(43) Veröffentlichungstag der Anmeldung: 21.10.2009
(73) Patentinhaber: WABCO GmbH, 30432 Hannover (DE)
(72) Erfinder: Gronau, Jens-Thorsten, 31789 Hameln (DE); Heurich, Mike, 31552 Apelern (DE); Wiggers, Tino, 30926 Seelze (DE)

(56) Entgegenhaltungen:
- EP-B1- 2 265 844
- DE-A1- 10 053 995
- DE-C2- 2 933 557
- DE-U1- 9 412 435

## Beschreibung

Die Erfindung betrifft ein Positionsmesssystem mit (a) einem Lager, (b) einer im Lager geführten Stange, die aus magnetisierbarem Material besteht und einen Außendurchmesser besitzt, (c) einem linearen Magnetfeldsensor und (d) einem Magneten, der benachbart zum Linearmagnetfeldsensor angeordnet ist.

Derartige Positionsmesssysteme werden beispielsweise in Pneumatik- oder Hydraulikzylinder verwendet, die in Getriebestellern angeordnet sind. Getriebesteller dienen dazu, bei einem automatischen Getriebe die Schaltbewegung durchzuführen. Damit eine elektrische Steuerung des Getriebes, in dem der Getriebesteller enthalten ist, stets die Position des Pneumatik- oder Hydraulikkolbens erfassen kann, besitzt der Getriebesteller ein Positionsmesssystem. Solche Positionsmesssysteme sind beispielsweise aus EP 2 265 844 B1 oder DE 100 53 995 A1 bekannt. EP 2 265 844 B1 fällt unter Artikel 54(3) EPÜ und ist daher für die Frage der erfinderischen Tätigkeit nicht von Bedeutung. Aus Stabilitätsgründen besteht die Stange in der Regel aus Stahl. Auf der Stange ist ein Magnet angeordnet, dessen Position von dem Linearmagnetfeldsensor detektiert wird.

Nachteilig an bekannten Positionsmesssystemen ist deren aufwändige Herstellung. Damit die Magnetfeldlinien des Magneten durch die Stange aus Stahl nicht verzerrt werden, wird der Magnet mittels einer nicht magnetisierbaren Aufnahme auf der Stange befestigt und steht über die Stange ab. Die Stange mit der aufgesetzten Aufnahme, die außerhalb des Durchmessers der Stange liegt, kann nicht durch ein Lager geführt werden, was zu einer aufwändigen Montage führt.

Der Erfindung liegt die Aufgabe zugrunde, ein besonders leicht montierbares und gleichzeitig genau messendes Positionsmesssystem vorzuschlagen.

Die Erfindung löst das Problem durch ein gattungsgemäßes ositionsmesssystem gemäß Anspruch 1. Vorteilhaft an dem erfindungsgemäßen Positionsmesssystem ist, dass es besonders einfach zu montieren ist. So kann die Stange mit in der Ausnehmung montierten Magneten in das Lager eingeführt und dort befestigt werden.

Im Vergleich zu bestehenden Positionsmesssystemen ergibt sich zudem ein geringerer Bauraum. Es ist ein weiterer Vorteil des erfindungsgemäßen Positionsmesssystems, dass magnetische Abschirmung trotz Anordnung des Magneten in dem Lagerdurchmessern nicht stattfindet und der Sensor störungsfrei funktioniert.

Magnetisierbares Material, das auch als ferromagnetisches Material bezeichnet werden könnte, das sich in einer Umgebung eines Magneten befindet, verformt die magnetischen Feldlinien, die von dem Magneten ausgehen. Es war daher zu erwarten, dass ein Anordnen des Magneten in der Ausnehmung in der Stange dazu führt, dass die Magnetfeldlinien von der Stange beeinflusst werden, so dass die Positionsmessergebnisse des Positionsmesssystems verfälscht werden. Aus diesem Grunde wurde der Magnet bislang stets außerhalb der zylindermantelförmigen Hüllfläche angeordnet. Es hat sich jedoch gezeigt, dass der die Magnetfeldlinien verändernde Einfluss der Stange sich so weit verringern lässt, dass trotz des negativen Einflusses der Stange eine exakte Positionsbestimmung möglich ist. In anderen Worten wird mit dem erfindungsgemäßen Positionsmesssystem das Vorurteil überwunden, dass der Magnet stets so weit wie möglich radial außen bezüglich der Stange angeordnet werden muss.

Der lineare Magnetfeldsensor ist insbesondere so angeordnet, dass eine Position der Stange erfassbar und durch eine elektrische Ansteuereinheit auslesbar ist.

Unter dem Merkmal, dass der Magnet in der Ausnehmung innerhalb einer zylindermantelförmigen Hüllfläche um die Stange angeordnet ist, ist zu verstehen, dass der Magnet innerhalb des Durchmessers der Stange positioniert ist. In anderen Worten ist der Magnet so in der Ausnehmung angeordnet, dass er nicht über die Stange radial vorsteht.

Eine zylindermantelförmige Hüllfläche ist eine gedachte zylindermantelförmige Fläche, die zylindermantelförmig ist, deren Punkte alle außerhalb der Stange liegen und für die es keine gedachte Zylindermantelfläche mit den beiden genannten Eigenschaften gibt, die einen größeren Durchmesser hat. Der Begriff der Hüllfläche wird also wie in mathematischem Sinne verwendet.

Bevorzugt ist das Lager an einer Hülse ausgebildet, die ein offenes und ein dem offenen Ende gegenüber liegendes geschlossenes Ende besitzen kann. In anderen Worten wird die Stange zumindest teilweise in der Hülse geführt, wobei es möglich, nicht aber notwendig ist, dass die Stange über ihre vollständige Längserstreckung in Kontakt mit der Hülse steht. Gemäß der Erfindung ist die Ausnehmung an einem axialen Rand der Stange angeordnet und geht in den Rand über. In diesem Fall kann die Ausnehmung auch als randständiger Absatz bezeichnet werden. Gemäß einer bevorzugten alternativen Ausführungsform ist die Ausnehmung vom Rand beabstandet angebracht. Erfindungsgemäß ist vorgesehen, dass die Stange eine zylinderförmige Grundgestalt hat. Gemäß der Erfindung erstreckt sich die Stange in einer Stangenlängsrichtung, wobei die Ausnehmung eine Grundfläche besitzt, die in Stangenlängsrichtung eine Grundflächenlänge hat und wobei der Magnet in Stangenlängsrichtung eine Magnetlänge hat, die kleiner ist als das 0,6-fache, insbesondere weniger als die Hälfte, der Grundflächenlänge. Dadurch werden die Magnetfeldlinien durch die Stange besonders wenig verzerrt. Gemäß der Erfindung ist die Ausnehmung an einer Seite bezüglich der Stangenlängsrichtung von einer ersten Ausnehmungswand begrenzt, wobei der Magnet einen Abstand von der ersten Ausnehmungswand hat, der mindestens der Magnetlänge entspricht. So wird eine besonders geringe Verformung der Magnetfeldlinien des Magneten durch die Stange ermöglicht.

Die Störung der Magnetfeldlinien durch die Stange wird dann besonders gering, wenn die erste Ausnehmungswand mit der Stangenlängsrichtung einen ersten Winkel von weniger als 45° einschließt.

Bevorzugt ist die Ausnehmung an einer der ersten Seite gegenüberliegenden zweiten Seite von einer zweiten Ausnehmungswand begrenzt und der Magnet hat einen Abstand von der zweiten Ausnehmungswand von mindestens der Magnetlänge. Bevorzugt schließt die zweite Ausnehmungswand mit der Stangenlängsrichtung einen zweiten Winkel von weniger als 45° ein.

Es ist möglich, nicht aber notwendig, dass die erste Ausnehmungswand und die zweite Ausnehmungswand im gleichen Winkel relativ zur Stangenlängsrichtung geneigt verlaufen.

Im Folgenden wird ein exemplarisches Ausführungsbeispiel der Erfindung mit Bezug auf die beigefügten Zeichnungen näher erläutert. Dabei zeigt
- Figur 1: eine Stange für ein erfindungsgemäßes Positionsmesssystem in einer perspektivischen Ansicht,
- Figur 2: einen Querschnitt gemäß der Ebene E,
- Figur 3: einen Längsschnitt durch ein erfindungsgemäßes Positionsmesssystem und
- Figur 4: eine Figur 3 entsprechende Ansicht.

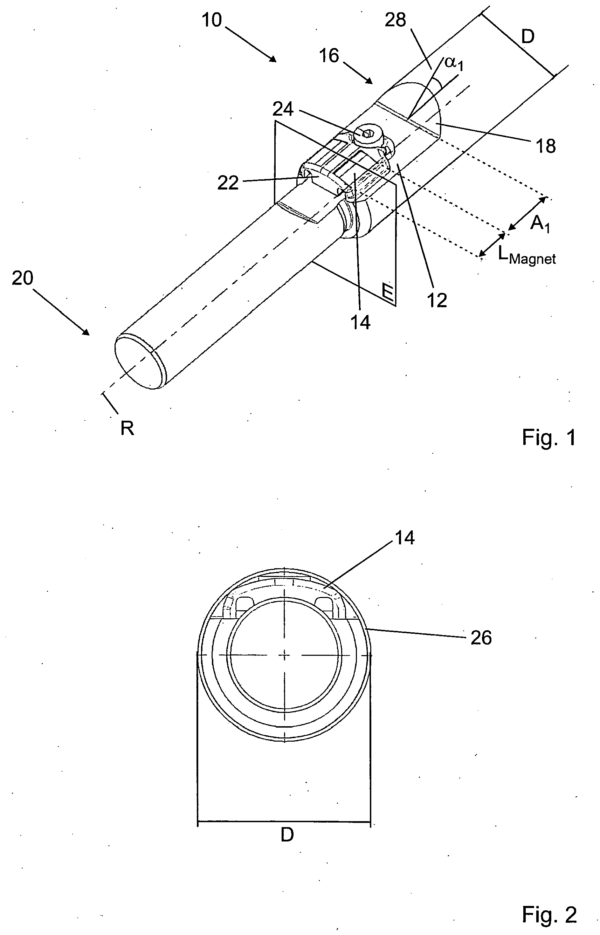

Figur 1 zeigt eine Stange 10, die aus magnetischem Material in Form von Stahl besteht und einen Außendurchmesser D besitzt. In einer Ausnehmung 12 ist ein Magnet 14 angeordnet. Der Magnet 14 hat eine Feldstärke von über einem Tesla, im vorliegenden Fall von 1,2 Tesla.

Die Ausnehmung 12 ist an einer ersten Seite 16 von einer ersten Ausnehmungswand 18 begrenzt, die den Übergang von der Ausnehmung 12 in die Stange 10 darstellt. Die erste Ausnehmungswand 18 ist relativ zu einer Stangenlängsrichtung R geneigt und schließt mit dieser einen ersten Winkel α₁ ein, der im vorliegenden Fall 45° beträgt. Die Stange 10 hat eine zylinderförmige Grundgestalt. Der Magnet 14 ist in einer Aufnahme 22 befestigt und mit dieser über eine Schraube 24 an der Stange 10 befestigt.

Der Magnet hat eine Magnetlänge L_{Magnet} von beispielsweise unter 20 mm, im vorliegenden Fall 10 mm. In Stangenlängsrichtung R hat der Magnet 14 einen ersten Abstand A₁ vom Grund der ersten Ausnehmungswand 18, der größer ist als die Magnetlänge L_{Magnet} und im vorliegenden Fall 20 mm beträgt.

Figur 2 zeigt einen Querschnitt senkrecht zur Stangenlängsrichtung R durch die Stange 10. Es ist zu erkennen, dass der Magnet 14 und die Aufnahme 22 des Magneten 14 innerhalb einer zylindermantelförmigen Hüllfläche 26 liegen, die den Außendurchmesser D hat. Die Hüllfläche 26 entsteht, indem eine gedachte zylindermantelförmige Fläche, die die in Figur 1 gezeigten Komponenten der Stange 10 umfasst, so lange in ihrem Durchmesser reduziert wird, bis der minimal mögliche Durchmesser erreicht ist. Da im vorliegenden Fall die Stange 10 jenseits der ersten Ausnehmungswand 18 (Figur 1) einen zylinderförmigen Grundkörper 28 mit Außendurchmesser D hat, ist im vorliegenden Fall die zylindermantelförmige Hüllfläche 26 mit der Außenkontur des Grundkörpers 28 identisch.

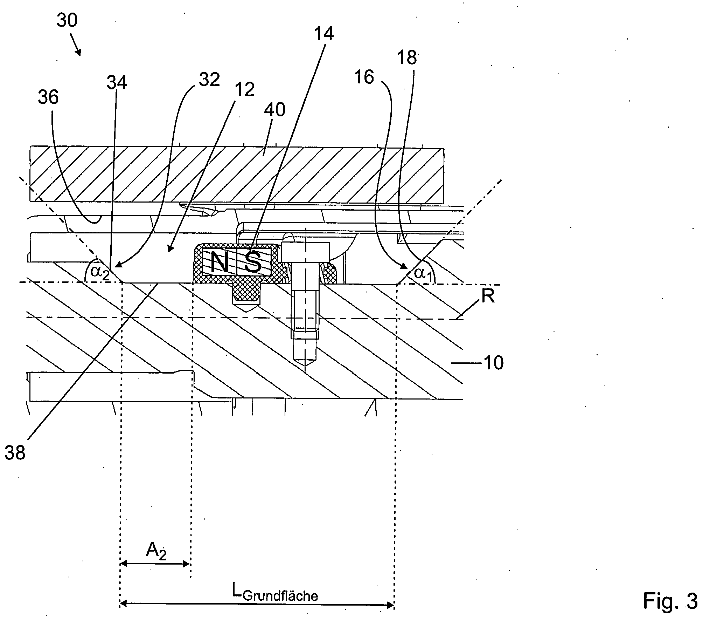

Figur 3 zeigt einen Querschnitt durch ein erfindungsgemäßes Positionsmesssystem 30 gemäß einer zweiten Ausführungsform. Es ist zu erkennen, dass die Stange 10 an einer der ersten Seite 16 gegenüberliegenden zweiten Seite 32 von einer zweiten Ausnehmungswand 34 begrenzt ist, die mit der Stangenlängsrichtung R einen zweiten Winkel α₂ von 45° einschließt. Die Stange 10 läuft in einem Lager 35, das aus zwei Teil-Lagern 35.1 und 35.2 besteht. Die Teil-Lager 35.1, 35.2 sind an einer Hülse 36 ausgebildet.

Zwischen der ersten Ausnehmungswand 18 und der zweiten Ausnehmungswand 34 besitzt die Ausnehmung 12 eine Grundfläche 38, die eine Grundflächenlänge L_{Grundfläche} besitzt. Die Grundflächenlänge L_{Grundfläche} beträgt ein Mehrfaches der Magnetlänge L_{Magnet} (vgl. Figur 1). Ein zweiter Abstand A₂ zwischen dem Magneten 14 und der zweiten Ausnehmungswand 34 ist größer als die Magnetlänge L_{Magnet}.

Benachbart zum Magneten 14 ist an der Hülse 36 ein linearer Magnetfeldsensor 40 angeordnet. Der lineare Magnetfeldsensor 40 kann auch als PLCD (permanent magnetic linear contactless displacement sensor, linearer kontaktloser Verschiebe-Sensor mit Permanentmagneten) bezeichnet werden. Es hat sich herausgestellt, dass mit dem Positionsmesssystem 30 die Position der Stange 10 relativ zum linearen Magnetfeldsensor 40 mit hoher Genauigkeit gemessen werden kann, wenn der erste Abstand A₁ und der zweite Abstand A₂ wie oben beschrieben gewählt sind. Zum Fertigen des Positionsmesssystems wird zunächst der Magnet 14 in seiner Aufnahme 22 an der Stange 10 befestigt. Anschließend wird die Stange 10 in die Hülse 36 eingeführt, so dass sie von den Teil-Lagern 35.1, 35.2 gelagert wird.

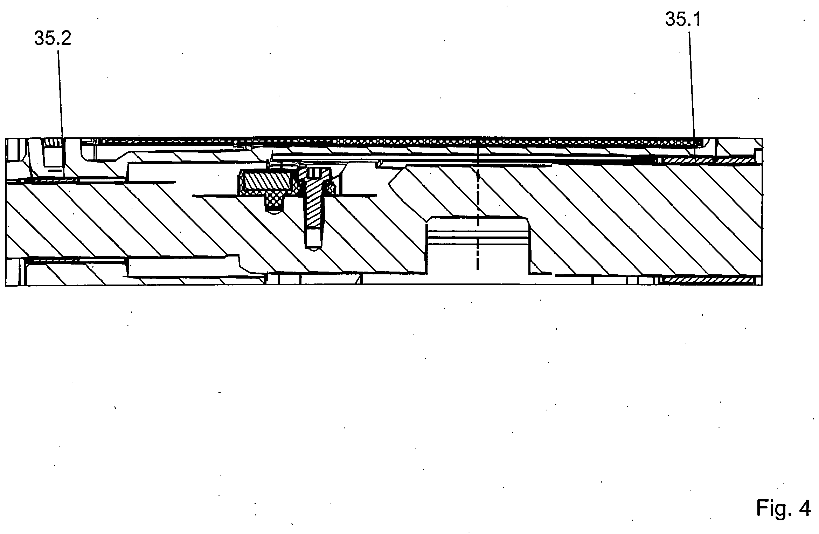

Figur 4 zeigt eine Figur 3 entsprechende Ansicht, in der die Teil-Lager 35.1, 35.2 besser zu sehen sind. Es ist zu erkennen, dass der Magnet 14 und die Ausnehmung 12 zwischen den Teil-Lagern 35.1, 35.2 angeordnet ist, was besonders vorteilhaft ist.

## Patentansprüche

1. Positionsmesssystem, mit
(a) zumindest einem Lager (35),
(b) einer im Lager (35) geführten Stange (10), die aus magnetisierbarem Material besteht und einen Außendurchmesser (D) besitzt,
(c) einem linearen Magnetfeldsensor (40) und
(d) einem Magneten (14), der benachbart zum linearen Magnetfeldsensor (40) angeordnet ist,
wobei
(e) die Stange (10) eine Ausnehmung (12) besitzt und
(f) der Magnet (14) in der Ausnehmung (12) innerhalb einer zylindermantelförmigen Hüllfläche (26) um die Stange (10) angeordnet ist, **dadurch gekennzeichnet, dass** die Ausnehmung (12) an einem axialen Rand der Stange (10) angeordnet ist und in den Rand (20) übergeht, wobei
- sich die Stange (10) in einer Stangenlängsrichtung (R) erstreckt,
- die Ausnehmung (12) eine Grundfläche besitzt, die in Stangenlängsrichtung (R) eine Grundflächenlänge (L_{Grundfläche}) hat, und
- der Magnet (14) in Stangenlängsrichtung (R) eine Magnetlänge (L_{Magnet}) hat, die kleiner ist als das 0,6-fache, insbesondere als die Hälfte, der Grundflächenlänge (L_{Grundfläche}), wobei die Ausnehmung (12) an einer ersten Seite (16) bezüglich der Stangenlängsrichtung (R) von einer ersten Ausnehmungswand (18) begrenzt ist und der Magnet (14) einen ersten Abstand (A₁) von der ersten Ausnehmungswand (18) hat, der mindestens der Magnetlänge (L_{Magnet}) entspricht, und wobei der Magnet (14) über eine Schraube (24) an der Stange (10) befestigt ist, wobei die Schraube (24) innerhalb der mantelförmigen Hüllfläche (26) angeordnet ist.

2. Positionsmesssystem nach Anspruch 1, **dadurch gekennzeichnet, dass** die erste Ausnehmungswand (18) mit der Stangenlängsrichtung (R) einen ersten Winkel (α₁) von weniger als 45° einschließt.

3. Positionsmesssystem nach Anspruch 1 oder 2, **dadurch gekennzeichnet, dass** die Ausnehmung (12) an einer der ersten Seite (16) gegenüberliegenden zweiten Seite (32) von einer zweiten Ausnehmungswand (34) begrenzt ist und der Magnet (14) einen zweiten Abstand (A) von der zweiten Ausnehmungswand (34) hat, der mindestens der Magnetlänge (L_{Magnet}) entspricht.

4. Positionsmesssystem nach einem der vorstehenden Ansprüche, **dadurch gekennzeichnet, dass** die zweite Ausnehmungswand (34) mit der Stangenlängsrichtung (R) einen zweiten Winkel (α₂) von weniger als 45° einschließt.

5. Positionsmesssystem nach einem der vorstehenden Ansprüche, **dadurch gekennzeichnet, dass** das Lager (35) an einer Hülse (36) ausgebildet ist, die ein offenes Ende und ein dem offenen Ende gegenüberliegendes geschlossenes Ende besitzt.

6. Getriebesteller mit einem Positionsmesssystem nach einem der vorstehenden Ansprüche.

## Claims

1. Position measuring system having
(a) at least one bearing, (35),
(b) a rod (10) that is guided in the bearing (35), consist of magnetizable material and has an outside diameter (D),
(c) a linear magnetic field sensor (40), and
(d) a magnet (14) that is arranged next to the linear magnetic field sensor (40),
wherein
(e) the rod (10) has a cutout (12), and
(f) the magnet (14) is arranged in the cutout (12) inside an enveloping surface (26), in the shape of a cylinder lateral surface, around the rod (10), **characterized in that** the cutout (12) is arranged at an axial edge of the rod (10) and merges into the edge (20), wherein
- the rod (10) extends in a rod longitudinal direction (R),
- the cutout (12) has a base surface, with a base surface length (L_{Base} surface) in the rod longitudinal direction (R), and
- the magnet (14) has in the rod longitudinal direction (R) a magnet length (L_{Magnet}) that is smaller than 0.6 times, in particular than half, the base surface length (L_{Base surface}), wherein the cutout (12) is delimited at a first end (16) with reference to the rod longitudinal direction (R) by a first cutout wall (18) and the magnet (14) has a first spacing (A₁) from the first cutout wall (18) that corresponds at least to the magnet length (L_{Magnet}), and wherein the magnet (14) is fastened on the rod (10) by means of a screw (24), wherein the screw (24) is arranged inside the enveloping surface (26) in the shape of a lateral surface.

2. Position measuring system according to Claim 1, **characterized in that** the first cutout wall (18) encloses with the rod longitudinal direction (R) a first angle (α₁) of less than 45°.

3. Position measuring system according to Claim 1 or 2, **characterized in that** the cutout (12) is delimited at a second end (32), situated opposite the first end (16), by a second cutout wall (34), and the magnet (14) has a second spacing (A) from the second cutout wall (34) that corresponds at least to the magnet length (L_{Magnet}).

4. Position measuring system according to one of the preceding claims, **characterized in that** the second cutout wall (34) encloses with the rod longitudinal direction (R) a second angle ((α₂) of less than 45°.

5. Position measuring system according to one of the preceding claims, **characterized in that** the bearing (35) is formed on a sleeve (36) that has an open end and a closed end situated opposite the open end.

6. Transmission actuator having a position measuring system according to one of the preceding claims.

## Revendications

1. Système de mesure de la position, avec :
(a) tout au moins un palier (35) ;
(b) une tringle (10) guidée dans le palier (35), laquelle est composée d'un matériau magnétisable et laquelle possède un diamètre externe (D) ;
(c) un capteur de champ magnétique (40) linéaire ; et
(d) un aimant (14), lequel est disposé à proximité du capteur de champ magnétique (40) linéaire ;
dans lequel
(e) la tringle (10) possède une cavité (12) ; et
(f) l'aimant (14) est disposé autour de la tringle (10), dans la cavité (12), à l'intérieur d'une surface de gainage (26) en forme d'enveloppe cylindrique, **caractérisé en ce que**
la cavité (12) est disposée au niveau d'une bordure axiale de la tringle (10) et pénètre dans ladite bordure (20) ; dans lequel
- la tringle (10) s'étend dans une direction longitudinale de la tringle (R) ;
- la cavité (12) possède une surface de base, laquelle présente une longueur de la surface de base (L_{surface de base}) dans la direction longitudinale de la tringle (R) ; et
- l'aimant (14) présente une longueur de l'aimant (Lₐᵢₘₐₙₜ) dans la direction longitudinale de la tringle (R), laquelle longueur est inférieure à 0,6 fois la surface de base (L_{surface de base}), en particulier laquelle est inférieure à la moitié de la longueur de la surface de base ; dans lequel la cavité (12) est délimitée par une première paroi (18) de la cavité au niveau d'un premier côté (16), par rapport à la direction longitudinale de la tringle (R), et l'aimant (14) présente une première distance (A₁) vis à vis de la première paroi (18) de la cavité, laquelle première distance (A₁) correspond au moins à la longueur de l'aimant (Lₐᵢₘₐₙₜ); et dans lequel l'aimant (14) est fixé à la tringle (10) par l'intermédiaire d'une vis (24) ; dans lequel la vis (24) est disposée à l'intérieur de la surface de gainage (26) en forme d'enveloppe.

2. Système de mesure de la position selon la revendication 1, **caractérisé en ce que** la première paroi (18) de la cavité inclut un premier angle (α1) de moins de 45° par rapport à la direction longitudinale de la tringle (R).

3. Système de mesure de la position selon la revendication 1 ou 2, **caractérisé en ce que** la cavité (12) est délimitée par une deuxième paroi (34) de la cavité, au niveau d'un deuxième côté (32) qui se trouve à l'opposé du premier côté (16) et l'aimant (14) présente une deuxième distance (A) vis à vis de la deuxième paroi (34) de la cavité, laquelle deuxième distance correspond au moins à la longueur de l'aimant (Lₐᵢₘₐₙₜ).

4. Système de mesure de la position selon l'une des revendications précédentes, **caractérisé en ce que** la deuxième paroi (34) de la cavité inclut un deuxième angle (α₂) de moins de 45° par rapport à la direction longitudinale de la tringle (R).

5. Système de mesure de la position selon l'une des revendications précédentes, **caractérisé en ce que** le palier (35) est conçu au niveau d'un manchon (36) qui possède une extrémité ouverte ainsi qu'une extrémité fermée, laquelle se trouve à l'opposé de l'extrémité ouverte.

6. Vérin de commande d'un train avec un système de mesure de la position selon l'une des revendications précédentes.
